# EUROPÄISCHE PATENTANMELDUNG

(11) **EP 1 430 991 A1**
(43) Veröffentlichungstag der Anmeldung: **23.06.2004**
(21) Anmeldenummer: 02028604.3
(22) Anmeldetag: 20.12.2002
(51) Int. Cl.: B23Q 3/157, B23Q 3/155

(54) **Werkzeugmaschine mit Werkzeug-Magazin und Werkzeug-Wechsel-Einrichtung**

(71) Anmelder: Hüller Hille GmbH, 71636 Ludwigsburg (DE)
(72) Erfinder: Stengele, Gerald, 71636 Ludwigsburg (DE); Neuschild, Sebastian, 71636 Ludwigsburg (DE)
(74) Vertreter: Rau, Manfred, Dr. Dipl.-Ing.

(57) **Zusammenfassung**

Eine Werkzeugmaschine weist eine in z-Richtung verlaufende Arbeitsspindel (12), ein Werkzeug-Magazin (28) und eine Werkzeug-Wechseleinrichtung (27) auf. Die Wechseleinrichtung (27) weist einen in z-Richtung verschiebbaren und um diese drehbaren Werkzeug-Wechselarm (51) auf, an dem auf einem gemeinsamen Drehkreis (74) zwei Werkzeughalter (55, 56) angeordnet sind, die in einer geöffneten Stellung in einander entgegengesetzter Drehrichtung geöffnet sind und die mit je einer Arretiereinrichtung (58) versehen sind. Das Werkzeug-Magazin (28) weist WerkzeugAufnahmen (36) auf, die endlos umlaufend antreibbar sind und die an einem Werkzeug-Bereitstellungsplatz (42) aus einer Lager-Stellung in die z-Richtung umklappbar sind.

## Beschreibung

Die Erfindung betrifft eine Werkzeugmaschine mit einem Werkzeug-Magazin und einer Werkzeug-Wechseleinrichtung.

Aus der DE 27 58 962 (entspr. US 4,102,035) ist eine derartige Werkzeugmaschine bekannt, deren Werkzeug-Magazin eine Magazin-Scheibe aufweist, die um eine in z-Richtung verlaufende Achse drehantreibbar ist und auf deren Umfang Werkzeug-Aufnahmen angebracht sind, in denen in z-Richtung herausnehmbare und einsetzbare Werkzeuge gehalten werden. Die Beladung dieser Werkzeug-Aufnahmen und die Entnahme der Werkzeuge hieraus erfolgt direkt mittels der Arbeitsspindel. Ein bestimmtes Werkzeug kann hierbei immer in der gleichen Werkzeug-Aufnahme gelagert werden, das heißt, es findet eine sogenannte Festplatz-kodierte Werkzeug-Verwaltung statt. Die Werkzeug-Verwaltung ist demzufolge sehr einfach. Nachteilig ist, dass die für einen Werkzeugwechsel erforderliche Zeit vollständig in die sogenannte Hauptzeit, also in die Zeit eingeht, innerhalb derer die Arbeitsspindel im Bearbeitungseinsatz an einem Werkstück sein könnte.

Aus der JP 2000-126968 A ist eine Werkzeugmaschine mit einem Arbeitsraum bekannt, in den eine in einer x-y-Ebene verschiebbare drehantreibbare Arbeitsspindel in z-Richtung hineinragt. Oberhalb des Arbeitsraumes ist ein Werkzeug-Magazin angeordnet, das um eine in z-Richtung verlaufende Drehachse drehbar ist und das an seinem Umfang Werkzeug-Aufnahmen aufweist. Zwischen dem Werkzeug-Magazin und der Arbeitsspindel ist eine Werkzeug-Wechseleinrichtung vorgesehen, die mehrere Werkzeug-Wechselarme aufweist, die um eine in z-Richtung verlaufende Achse drehantreibbar sind. Sie weisen radial geöffnete Werkzeughalter auf. Zur Entnahme von Werkzeugen aus dem Magazin und der Arbeitsspindel einerseits und zum Einsetzen von Werkzeugen in das Magazin und die Arbeitsspindel andererseits bedarf es jeweils außer den Drehbewegungen des Werkzeug-Wechselarms Relativverschiebungen zwischen Werkzeug-Magazin und Werkzeug-Wechseleinrichtung einerseits und Werkzeug-Wechseleinrichtung und Arbeitsspindel andererseits. Dies ist zeitaufwendig und muss zum Teil während der Hauptzeit der Arbeitsspindel abgewickelt werden. Eine ähnliche Werkzeugmaschine ist aus der JP 11-0990492 A bekannt.

Aus der EP 0 028 329 B1 (entspr. US 4,335,500) ist ein um eine horizontale Achse drehantreibbares Werkzeug-Magazin bekannt, dessen Werkzeug-Aufnahmen in ihrer Lager-Stellung senkrecht zur z-Richtung verlaufen, und die zur Entnahme und zum Wiedereinsetzen in eine radial zur Drehachse des Magazins und parallel zur Drehachse der Arbeitsspindel verlaufende Position abgeklappt werden können.

Es ist weiterhin bei Werkzeugmaschinen mit einem Werkzeug-Magazin, in dem die Werkzeuge stets am selben Platz im Magazin abgelegt werden, bei denen also eine Festplatz-kodierte Werkzeug-Verwaltung stattfindet, bekannt, einen Übergabe-Roboter zwischen dem Werkzeug-Magazin und der Werkzeug-Wechseleinrichtung einzusetzen.

Der Erfindung liegt die Aufgabe zugrunde, eine Werkzeugmaschine der gattungsgemäßen Art so auszugestalten, dass bei sehr kompaktem Aufbau ein Werkzeugwechsel unter geringstmöglicher Beeinträchtigung der Hauptzeit der Arbeitsspindel vollzogen werden kann, wobei gleichzeitig eine Festplatz-kodierte Werkzeug-Verwaltung möglich sein soll.

Diese Aufgabe wird erfindungsgemäß durch die Merkmale des Anspruches 1 gelöst. Bei der erfindungsgemäßen Werkzeugmaschine erfolgt eine Festplatz-kodierte Werkzeug-Verwaltung, die der bei bekannten Werkzeug-Wechseleinrichtungen ohne Handhabungs-Roboter üblichen chaotischen Werkzeug-Verwaltung aus steuerungstechnischen Gesichtspunkten vorzuziehen ist. Durch die erfindungsgemäßen Maßnahmen wird erreicht, dass der Werkzeug-Wechselarm ein Werkzeug aus dem Magazin entnehmen kann, ohne dass hierdurch die Hauptzeit der Arbeitsspindel berührt wird, dass heißt sie kann noch weiter im Einsatz sein. Erst wenn der nicht mit einem Werkzeug bestückte Werkzeughalter des Werkzeugarms in den Bereich des aus der Arbeitsspindel zu entnehmenden Werkzeugs geschwenkt wird, muss die Arbeitsspindel außer Betrieb gesetzt und in den Drehkreis des Werkzeug-Wechselarms verbracht werden, wo die Entnahme des Werkzeugs und unmittelbar danach nach nur einer kurzen Schwenkbewegung des Wechselarms das Einsetzen des neuen Werkzeug erfolgt. Bereits dann kann die Arbeitsspindel wieder in ihre Arbeitsstellung verfahren werden. Die Rückgabe des der Werkzeugspindel entnommenen Werkzeugs ins Magazin erfolgt während der Hauptzeit der Arbeitsspindel, also während diese im Einsatz ist. Da hierdurch die Hauptzeit der Arbeitsspindel überhaupt nicht beeinträchtigt wird, kann jedes Werkzeug immer in derselben Werkzeug-Aufnahme des Magazins abgelegt werden. Hierdurch wird steuerungstechnisch eine sehr einfache Festplatz-kodierte Werkzeugverwaltung erreicht. Der Werkzeug-Wechselarm wird um eine in der x-y-Ebene feste, üblicherweise in z-Richtung orientierte Achse gedreht beziehungsweise verschwenkt; er wird lediglich zur Entnahme der Werkzeuge aus dem Magazin beziehungsweise der Arbeitsspindel beziehungsweise umgekehrt zur Rückgabe eines Werkzeuges in das Magazin beziehungsweise zum Einsetzen eines Werkzeuges in die Arbeitsspindel in z-Richtung verschoben. Eines Handhabungs-Roboters für das Werkzeug bedarf es nicht. Bei dem Magazin kann es sich um ein solches mit einer Magazin-Scheibe oder aber auch um ein Ketten-Umlaufmagazin oder dergleichen handeln.

Die Unteransprüche geben zahlreiche vorteilhafte Ausgestaltungen der Erfindung wieder.

Weitere Merkmale, Vorteile und Einzelheiten der Erfindung ergeben sich aus der nachfolgenden Beschreibung eines Ausführungsbeispiels anhand der Zeichnungen. Es zeigt:
- Fig. 1: eine Teil-Seiten-Ansicht einer Werkzeugmaschine mit Werkzeug-Magazin und Werkzeug-Wechseleinrichtung in teilweise aufgebrochener Darstellung,
- Fig. 2: eine Stirnansicht der Werkzeugmaschine nach Fig. 1,

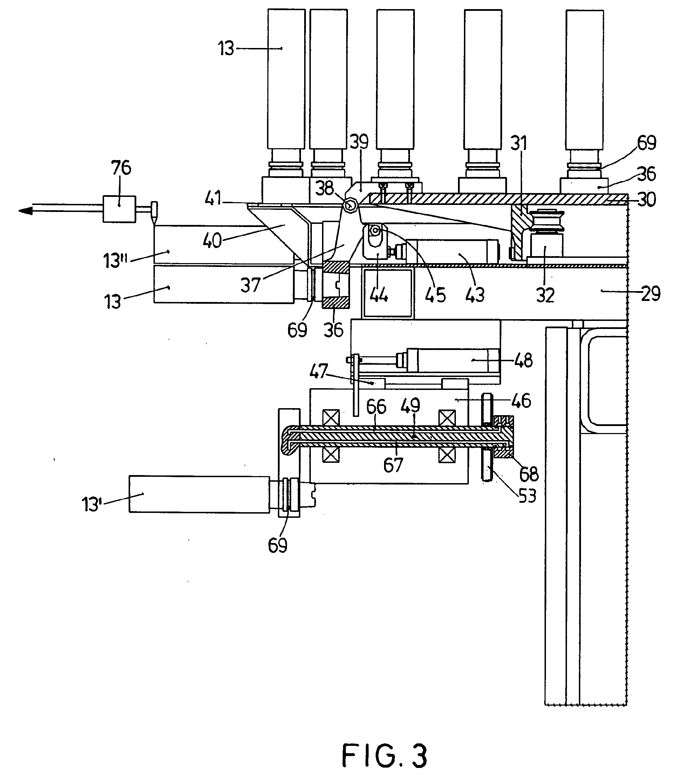

- Fig. 3: einen die Werkzeug-Wechseleinrichtung und einen Teil des Werkzeug-Magazins in vergrößerter Darstellung zeigenden Teilausschnitt aus Fig. 1,
- Fig. 4: eine Stirnansicht auf die Werkzeug-Wechseleinrichtung und
- Fig. 5 bis 12: verschiedene Arbeitsstellungen der Werkzeug-Wechseleinrichtung während eines Werkzeugwechsels.

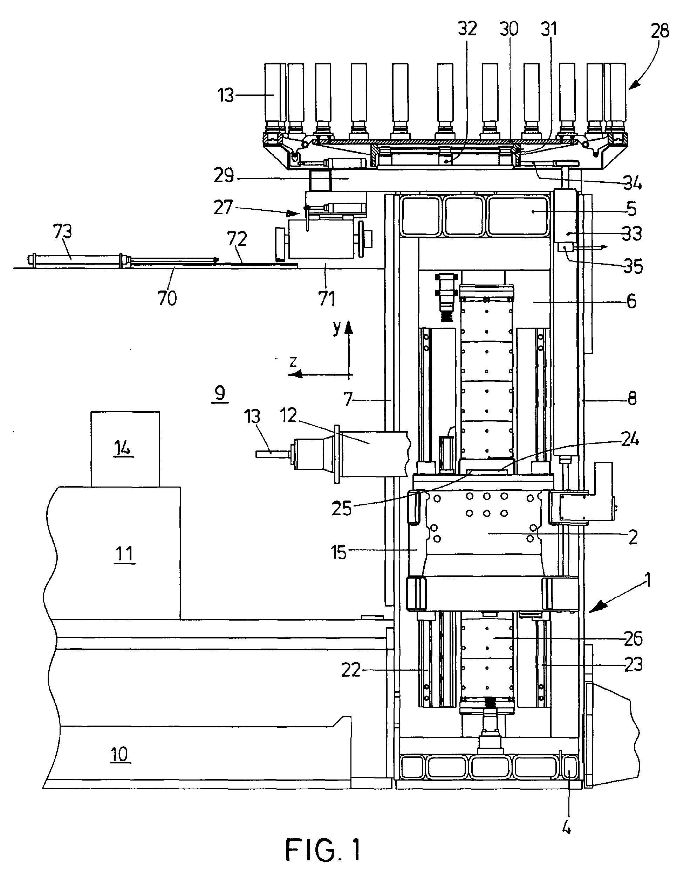

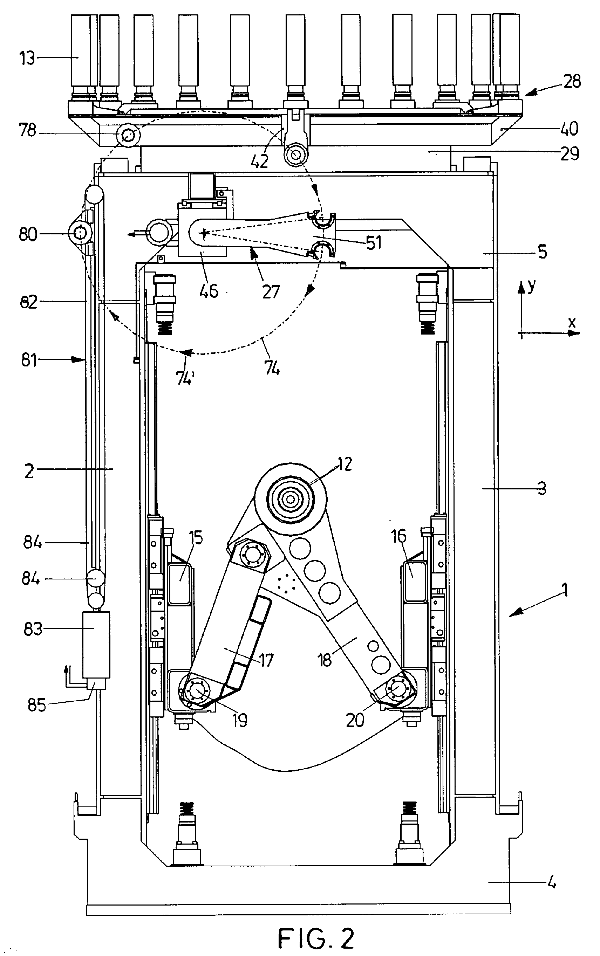

Die in den Fig. 1 und 2 dargestellte Werkzeugmaschine ist in ihrem Grundaufbau bekannt, beispielsweise aus der EP 0 028 329 B 1 (entspr. US 4,335,500). Es handelt sich um eine zur mindestens 3-achsigen Bearbeitung von Werkstücken mittels eines drehantreibbaren Werkzeuges dienende Werkzeugmaschine. Sie weist einen quaderförmigen Ständer 1 auf, der aus zwei zueinander parallelen vertikalen Seitenwänden 2, 3 und einem Boden 4 und einem Oberteil 5 besteht, die die Seitenwände 2, 3 miteinander verbinden. Der Ständer 1 umschließt als Innenraum 6 einen sogenannten Aktorenraum und ist an seinen beiden Stirnseiten 7, 8 offen ausgebildet. Vor der einen Stirnseite 7 liegt ein Arbeitsraum 9, wo auf einem mit dem Ständer 1 verbundenen Maschinenbett 10 ein nur angedeuteter Werkstückhalter 11 angeordnet ist.

Im Innenraum 6 ist eine als Motorspindel ausgebildete Arbeitsspindel 12 angeordnet, die durch die Stirnseite 7 in den Arbeitsraum 9 vorragt und ein drehantreibbares Werkzeug 13 zur Bearbeitung eines auf dem Werkstückhalter 11 angeordneten Werkstücks 14 trägt. Üblicherweise ist die Stirnseite 7 mit einer nicht dargestellten Abdeckung verdeckt, die bei Bewegungen der Arbeitsspindel 12 in horizontaler x-Richtung und vertikaler y-Richtung mitbewegt wird, die aber kein tragender Bestandteil des Ständers 1 ist, sondern nur dazu dient, den Arbeitsraum 9 vom Innenraum 6 zu trennen. Die Arbeitsspindel 12 kann in zur x-y-Ebene senkrechter z-Richtung bewegbar sein; es ist aber auch möglich, dass nur der Werkstückhalter 11 in bekannter Weise in z-Richtung bewegbar ist.

Zur Bewegung der Arbeitsspindel 12 sind zwei in y-Richtung bewegbare, an den Innenseiten der Seitenwände 2, 3 geführte Antriebs-Schlitten 15, 16 vorgesehen, die mittels zweier Koppeln 17, 18 miteinander verbunden sind.

Jede Koppel 17, 18 ist mit dem zugehörigen Schlitten 15, 17 mittels eines Drehgelenks 19, 20 mit in z-Richtung verlaufender Drehachse verbunden. Die beiden Koppeln 17, 18 wiederum sind mittels eines Drehgelenks 21 mit in z-Richtung verlaufender Drehachse miteinander verbunden. Dadurch, dass die drei Drehachsen der Drehgelenke 19, 20, 21 in z-Richtung verlaufen und die Schlitten 15, 16 in y-Richtung verfahren werden, kann die Arbeitsspindel 12 bei Verschiebungen der Schlitten 15, 16 parallel zu sich in der x-y-Ebene innerhalb eines in dieser Ebene liegenden Arbeitsbereiches verschoben werden.

Die Schlitten 15, 16 sind auf in z-Richtung in Abstand voneinander jeweils an der Innenseite der Seitenwände 2 beziehungsweise 3 angeordneten Führungsschienen 22, 23 verschiebbar geführt. Zwischen jeweils an einer Seitenwand 2 beziehungsweise 3 angebrachten Führungsschienen 22, 23 sind als Antriebe Linearmotoren 24 vorgesehen. Der jeweilige Primärteil 25 jedes Linearmotors 24 ist an der der benachbarten Seitenwand 2 beziehungsweise 3 zugewandten Seite des jeweiligen Antriebs-Schlitten 15 beziehungsweise 16 angebracht. Der jedem Primärteil 25 zugeordnete, durch Magnetplatten gebildete Sekundärteil 26 jedes Linearmotors 24 ist zwischen den Führungsschienen 22, 23 an der jeweiligen Seitenwand 2 beziehungsweise 3 angebracht. Weitere Einzelheiten ergeben sich insoweit aus der EP-Patentanmeldung 02 007 979.4 (entspr. US Ser. No. 10,233,094).

An dem Ständer 1 ist eine Werkzeug-Wechseleinrichtung 27 zur automatisierten Ver- und Entsorgung der Arbeitsspindel 12 mit Werkzeugen 13 angeordnet. Über ihr ist ein im wesentlichen dem Stand der Technik nach der EP 0 028 329 B 1 entsprechendes Werkzeug-Magazin 28 angeordnet, das über eine Konsole 29 auf dem Oberteil 5 des Ständers 1 abgestützt ist. Das Magazin 28 selber weist eine Magazin-Scheibe 30 auf, die an ihrer Unterseite einen Ring 31 aufweist, der wiederum auf Lagern 32 abgestützt ist, die auf der Konsole 29 angebracht sind. Die Magazin-Scheibe 30 wird mittels eines Elektro-Motors 33 über einen Zahnriementrieb 34 oder ein anderes geeignetes Übertragungsmittel angetrieben. Der Drehwinkel des Motors 33 und somit auch der Drehwinkel der Magazin-Scheibe 30 und damit des Magazins 28 wird von einer nicht dargestellten Maschinensteuerung über einen Drehwinkelgeber 35 erfasst.

Am Außenumfang der Magazin-Scheibe 30 sind dem Schaft des Werkzeuges 30 angepasste, beispielsweise angenähert als Konus-Ringe ausgebildete, schwenkbare Werkzeug-Aufnahmen 36 angebracht, in denen sich jeweils ein Werkzeug 30 befindet. Die Werkzeug-Aufnahmen 36 sind jeweils an einem Schwenkhebel 37 angebracht, der über ein Gelenk 38 mit einer Halterung 39 verbunden ist, die mit der Magazin-Scheibe 30 verschraubt ist.

An der Konsole 29, also ortsfest zum Ständer 1, ist eine die Magazin-Scheibe 30 umgebende, im Querschnitt winkelförmig ausgebildete ringförmige Gleitbahn 40 angeordnet, die auf ihrer Oberseite mit einem Gleitbelag 41 versehen ist. Auf diese ringförmige Gleitbahn 40 stützen sich die Werkzeug-Aufnahmen 36 in ihrer normalen Transportstellung, in der die Werkzeuge 13 senkrecht von ihnen nach oben ragen, ab. Diese Gleitbahn 40 weist lediglich an einem Werkzeug-Bereitstellungsplatz 42 eine Unterbrechung auf.

Das Verschwenken einer Werkzeug-Aufnahme 36 am Bereitstellungsplatz 42 erfolgt mittels eines beispielsweise als Pneumatik-Zylinder ausgebildeten Linearantriebs 43, der eine in z-Richtung verschiebbare KupplungsKlaue 44 aufweist, die eine an der Unterseite des Schwenkhebels 37 angebrachte Kupplungs-Rolle 45 aufnehmen kann. Die Werkzeug-Aufnahme 36 wird durch Zurückfahren der Klaue 44 heruntergeklappt. Durch Herausfahren der Klaue 44 wird die Werkzeug-Aufnahme 36 in die vertikale Position des Werkzeuges 30 verbracht. In dieser Stellung können die Kupplungs-Rollen 45 sämtlicher Schwenkhebel 37 bei Drehungen der Magazin-Scheibe 30 durch die Klaue 44 hindurchgefahren und abgestützt werden.

Anstelle des geschilderten Werkzeug-Magazins 28 kann auch jedes andere zum Stand der Technik gehörende Werkzeug-Magazin eingesetzt werden, das die geschilderte Funktion am Bereitstellungs-Platz aufweist.

Unterhalb des Werkzeug-Magazins 28 und oberhalb der Arbeitsspindel 12 ist an der Unterseite der Konsole 29 die Werkzeug-Wechseleinrichtung 27 angeordnet. Sie weist einen in z-Richtung verschiebbaren Schlitten 46 an Führungen 47 auf, der mittels eines Linearantriebs 48 antreibbar ist. Dieser kann als fluidisch beaufschlagbarer Kolben-Zylinder-Antrieb ausgebildet sein, der zwischen zwei Endlagen verschiebbar ist. In dem gehäuseartigen Schlitten 46 ist eine sich in z-Richtung erstreckende Welle 49 in Lagern 50 gelagert, die an ihrem dem Arbeitsraum 9 zugewandten Ende einen Werkzeug-Wechselarm 51 trägt. Der Schlitten 46 ist nicht zwingend vorgesehen; die Welle 49 kann auch selber in z-Richtung verschiebbar gelagert sein. An ihrem dem Ständer 1 zugewandten Ende ist die Welle 49 über einen Elektro-Motor 52 und einen Zahnriementrieb 53 schwenkantreibbar. Die Drehwinkelposition des Motors 52 und damit auch des Wechselarms 51 wird über einen Drehwinkelgeber 54 ständig erfasst und auf die nicht dargestellte Maschinensteuerung gegeben. Hierüber kann jeder beliebige Schwenkwinkel des Wechselarms 51 eingestellt werden. Anstelle des Zahnriementriebes 53 können selbstverständlich auch Kettentriebe oder Zahnradgetriebe eingesetzt werden. Auch rotative Direktantriebe, z.B. mittels eines Torque-Motors, sind möglich. Die Hubbewegung des Schlittens 46 in z-Richtung und die Schwenkbewegung des Wechselarms können auch als kombinierte Bewegung über ein Kurvengetriebe mit gemeinsamem Motor erzeugt werden.

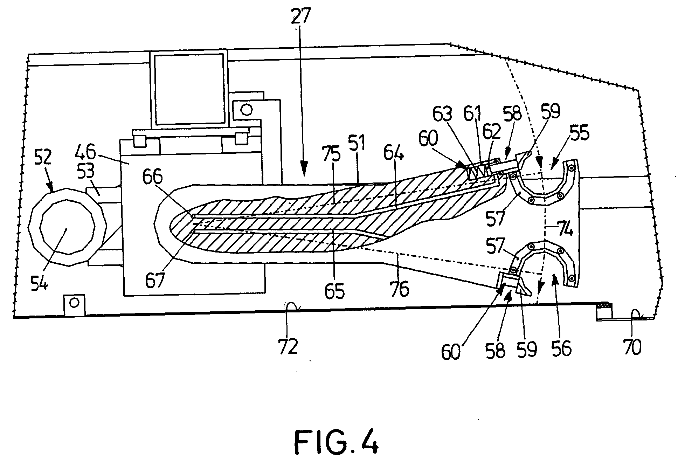

An dem der Welle 49 abgewandten freien Ende weist der Werkzeug-Wechselarm 51 zwei Werkzeughalter 55, 56 auf. Diese bestehen jeweils aus einem Halbring 57 aus gehärtetem Stahl, der jeweils mit dem Wechselarm 51 verschraubt ist. Der Halbring 57 des in Fig. 4 oberen Werkzeughalters 55 ist nach oben offen, während der Halbring 57 des unteren Werkzeughalters 56 nach unten offen ist. Beide Werkzeughalter 55, 56 weisen jeweils auf ihrer der Welle 49 zugewandten Seite eine Arretiereinrichtung 58 auf, die jeweils eine zwischen einer Öffnungsstellung und einer Arretierstellung verschiebbare Arretierbacke 59 aufweist. Diese Arretierbacke 59 ist mittels eines Linearantriebs 60 verschiebbar. Dieser wird durch einen mit Druckfluid beaufschlagbaren Kolben-Zylinder-Antrieb gebildet, dessen Zylinder 61 jeweils im Wechselarm 51 ausgebildet ist. Im Zylinder 61 ist ein Kolben 62 verschiebbar angeordnet, der mit der Arretierbacke 59 verbunden ist. Der Kolben 62 ist mittels einer Feder 63 belastet, die ihn und damit die Arretierbacke 59 in die Arretierstellung schiebt. Der einseitig mit Druckfluid beaufschlagbare Kolben 62 wird über einen Druckfluid-Kanal 64 beziehungsweise 65 mit Druckfluid beaufschlagt, der im Wechselarm 51 ausgebildet ist. Mittels des Druckfluids wird der Kolben 62 in den Zylinder 61 gegen die Kraft der Feder 63 eingefahren, wodurch die Arretierbacke 59 in ihre Öffnungsstellung verbracht wird. Die Versorgung der Kanäle 64 erfolgt über entsprechende, in der Welle 49 ausgebildete Druckfluid-Kanäle 66 beziehungsweise 67, die wiederum über einen Drehverteiler 68 mit Druckfluid versorgt werden. Dadurch, dass die Druckfluid-Kanäle 64, 66 einerseits und 65, 67 andererseits voneinander getrennt sind, können die Arretiereinrichtungen 58 der Werkzeughalter 55 beziehungsweise 56 unabhängig voneinander betätigt werden. Die Halbringe 57 und die Arretierbacken 59 der Werkzeughalter 55, 56 sind so ausgebildet, dass sie in Greiferrillen 69 der Werkzeuge 13 eingreifen können. Anstelle der hydraulischen oder pneumatischen Betätigungen mittels Druckfluid kann eine Betätigung der Arretierbacken 59 auch durch Stößelstangen, Kulissen und dergleichen erfolgen.

Der Arbeitsraum 9 ist nach oben durch eine Abdeckung 70 verschlossen, die unterhalb der Werkzeug-Wechseleinrichtung 27 eine winkelförmige Öffnung 71 aufweist, die wiederum mittels einer verschiebbaren winkelförmigen Klappe 72 verschließbar ist, die mittels eines Druckfluid beaufschlagbaren Kolben-Zylinder-Antriebs 73 verschiebbar ist. Die Öffnung 71 wird nur zum Werkzeugwechsel durch entsprechendes Verschieben der Klappe 72 freigegeben.

### Ein Werkzeugwechsel geht wie folgt vor sich:

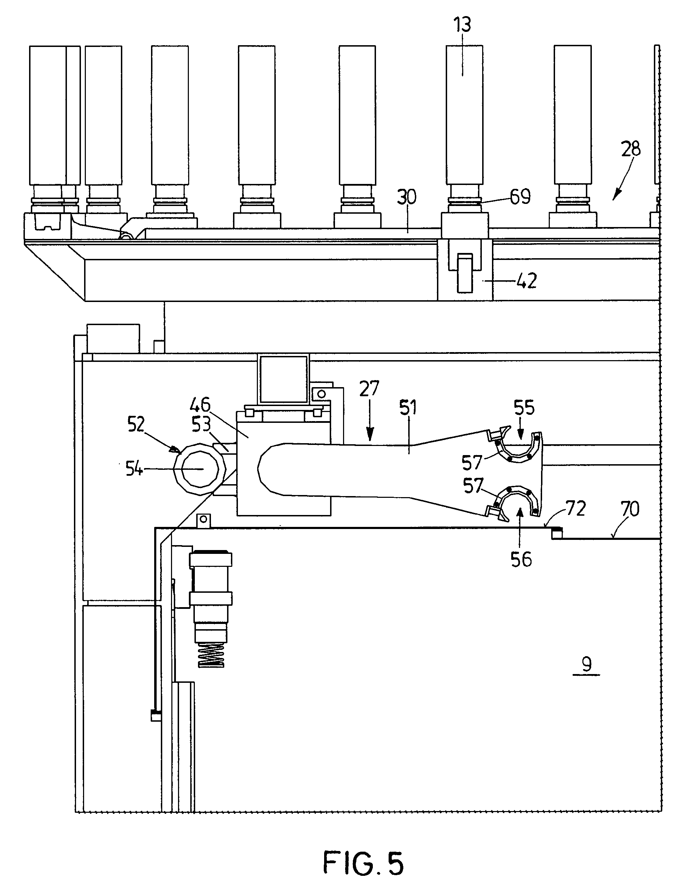

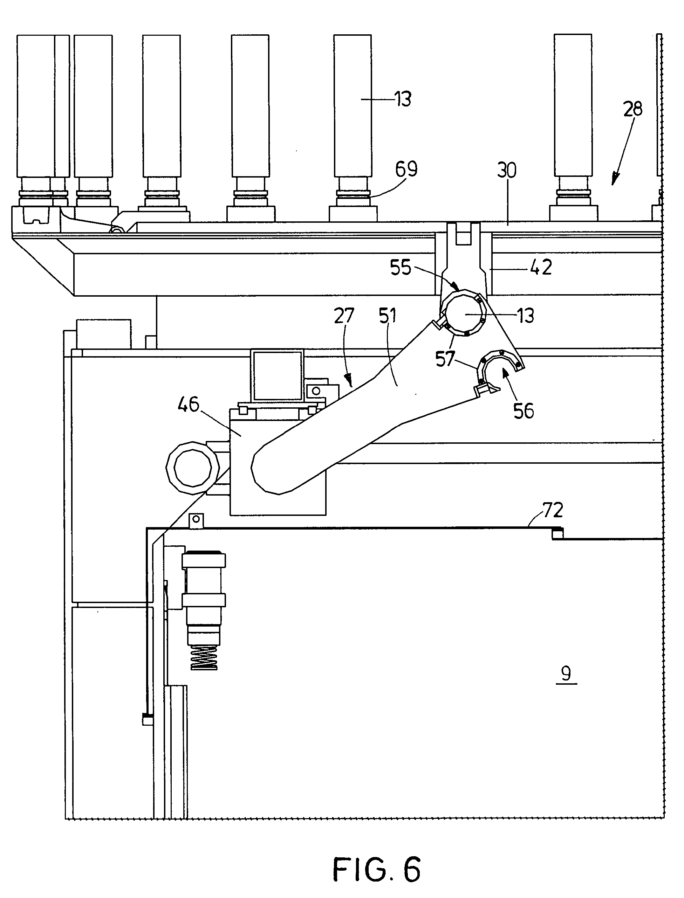

Zu Beginn eines Wechselvorgangs befindet sich der Wechselarm 51 entsprechend Fig. 5 in einer etwa horizontalen Ruhestellung, in der der Schlitten 46 sich in der dem Ständer 1 benachbarten ersten Endlage befindet. In den Werkzeughaltern 55, 56 befinden sich keine Werkzeuge 13. Aus dieser Ruhestellung schwenkt der Wechselarm 51 entgegen dem Uhrzeigersinn in die in Fig. 6 dargestellte obere Übergabeposition, in der er ein Werkzeug 13 vom Werkzeug-Magazin 28 übernimmt, das zuvor durch entsprechende Drehung der Magazin-Scheibe 30 an den Werkzeug-Bereitstellungsplatz 42 verbracht worden ist. Während dieser Zeit ist die Klappe 72 zum Arbeitsraum 9 noch geschlossen. Die Arbeitsspindel 12 kann noch im Bearbeitungseinsatz am Werkstück 14 sein. Die Übernahme des Werkzeugs 13 erfolgt in der Weise, dass der Werkzeughalter 55 von unten derart gegen das Werkzeug 13 angelegt wird, dass der Halbring 57 in die Greiferrille 69 eintaucht. Während dieses Vorgangs ist die Arretiereinrichtung 58 geöffnet. Nach dem Eintauchen wird sie geschlossen, so dass das Werkzeug 13 fest im Werkzeughalter 55 gehalten ist. Die Aufnahme und Halterung von Werkzeugen 13 in den Werkzeughaltern 55 beziehungsweise 56 während einfacher Drehschwenkbewegungen des Wechselarms 51 ist deshalb möglich, weil die Werkzeughalter 55, 56 jeweils in Richtung des Drehkreises 74 also senkrecht zu den die Werkzeughalter 55 beziehungsweise 56 tangierenden Radien 75, 76, das heißt tangential zum Drehkreis 74 geöffnet sind.

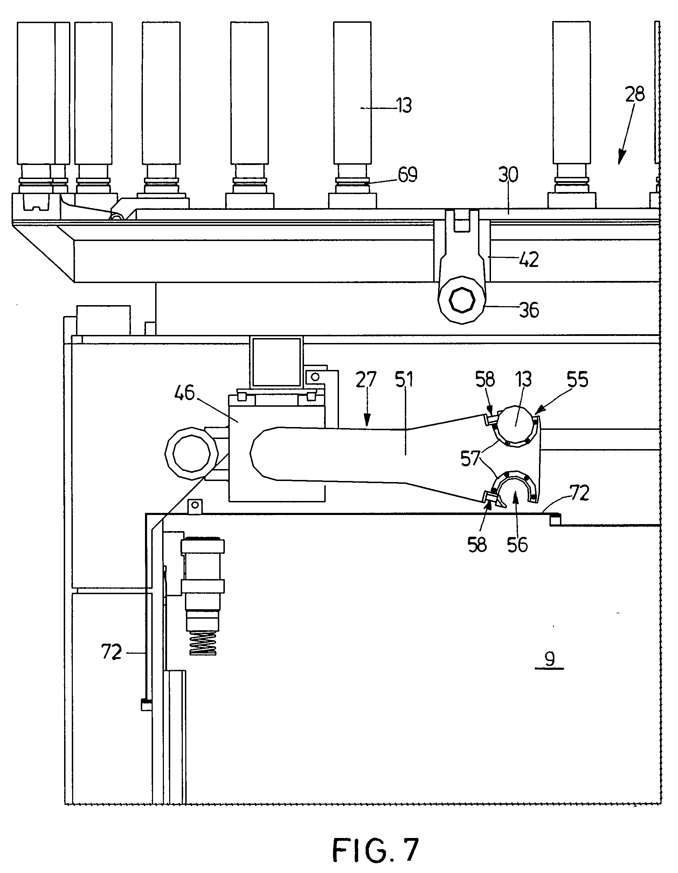

Anschließend wird der den Wechselarm 51 tragende Schlitten 46 in z-Richtung vom Ständer 1 weg in die zweite Endlage verfahren, wodurch das Werkzeug 13 aus der Werkzeug-Aufnahme 36 herausgezogen wird und von dieser freikommt. Anschließend wird der Wechselarm 51 in der Haupt-Drehrichtung 74', das heißt im vorliegenden Ausführungsbeispiel im Uhrzeigersinn, in die horizontale Stellung heruntergeschwenkt, allerdings nunmehr in der nach vom herausgefahrenen vorderen Endlage, die in Fig. 7 dargestellt ist. Auch während dieser Zeit ist die Klappe 72 noch geschlossen. Die Arbeitsspindel 12 befindet sich noch im Einsatz.

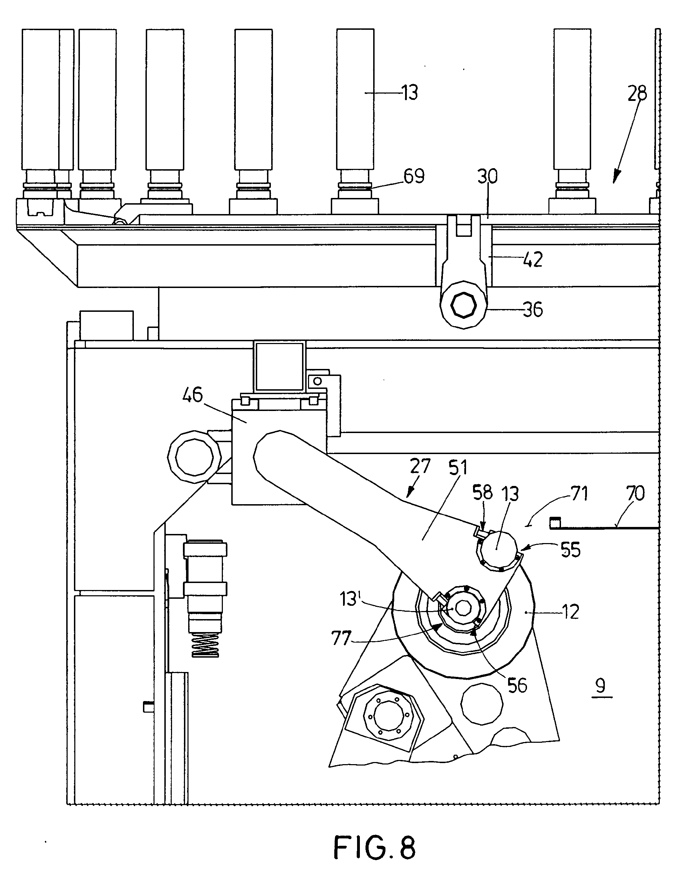

Danach und erst jetzt verfährt die Arbeitsspindel 12 in eine obere Werkzeugwechselposition, wie sie in Fig. 8 dargestellt ist. In dieser Position verbleibt die Arbeitsspindel 12 während des gesamten Werkzeug-Wechselvorgangs mit ihrer Aufnahme 77 auf dem Drehkreis 74 des Wechselarms 51. Die Klappe 72 ist zurückgefahren, so dass der Wechselarm 51 nach unten durch die Öffnung 71 in den Arbeitsraum 9 eintauchen kann.

Der Schlitten 46 mit dem Wechselarm 51 wird in die zurückgezogene, dem Ständer 1 benachbarte erste Endlage verfahren, so dass der Wechselarm 51 beim Herunterschwenken in eine Werkzeugwechselposition mit seinem unteren Werkzeughalter 56 das in der Werkzeug-Aufnahme 77 der Arbeitsspindel 12 befindliche Werkzeug 13' in der bereits geschilderten Weise ergreifen kann. Der Schlitten 46 mit dem Wechselarm 51 wird dann wieder in z-Richtung vom Ständer 1 weg in die zweite Endlage bewegt, wodurch das Werkzeug 13' aus der Werkzeugaufnahme 77 der Arbeitsspindel 12 herausgezogen wird.

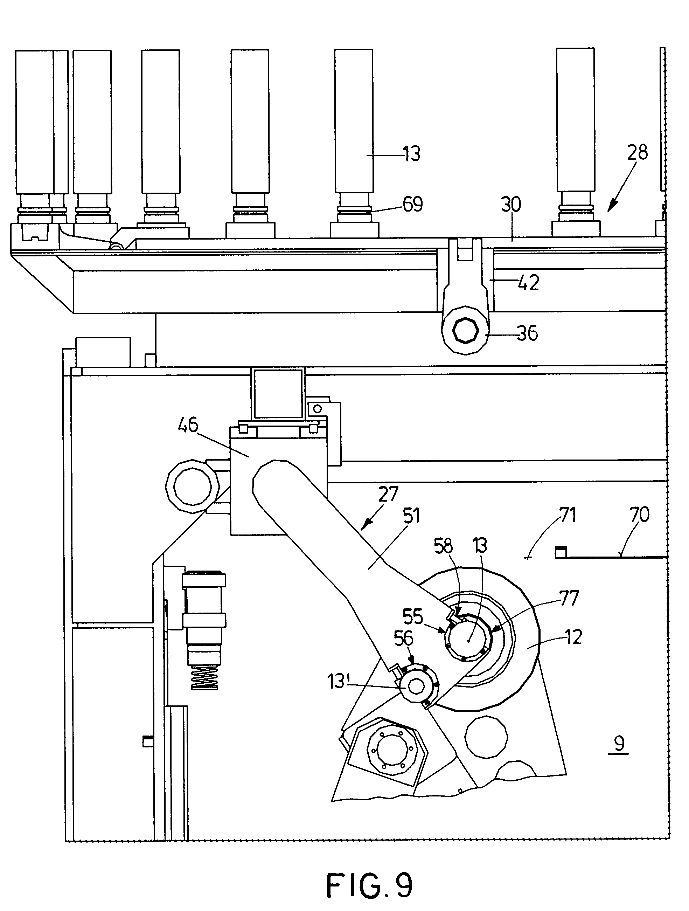

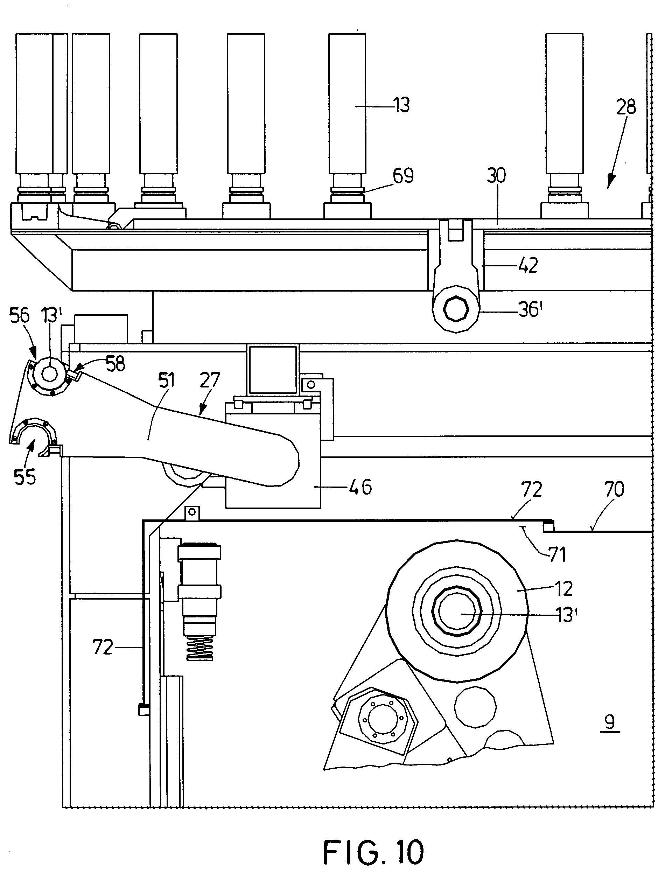

Anschließend wird der Wechselarm 51 aus der in Fig. 8 dargestellten Werkzeug-Entnahmestellung in Haupt-Drehrichtung 74' weiter nach unten in die Werkzeug-Übergabestellung verschwenkt, in der sich das Werkzeug 13 vor der Aufnahme 77 der Arbeitsspindel 12 befindet. Der Werkzeug-Wechselarm 51 wird wieder in Richtung zum Ständer 1 in die erste Endlage zurückgezogen, wodurch das neue Werkzeug 13 in die Aufnahme 77 der Arbeitsspindel 12 eingeschoben wird. Die Arretiereinrichtung 58 des oberen Werkzeughalters 55 wird geöffnet, so dass der Werkzeughalter 55 vom Werkzeug 13 freikommt. Der Wechselarm 51 wird in der gleichen Haupt-Drehrichtung 74', entsprechend den Fig. 5 bis 12 also im Uhrzeigersinn, weitergedreht. Wenn er durch die Öffnung 71 hindurchgeschwenkt ist, wird die Klappe 72 wieder geschlossen; die Arbeitsspindel 12 kann mit dem neu eingesetzten Werkzeug 13' wieder zum Einsatz kommen.

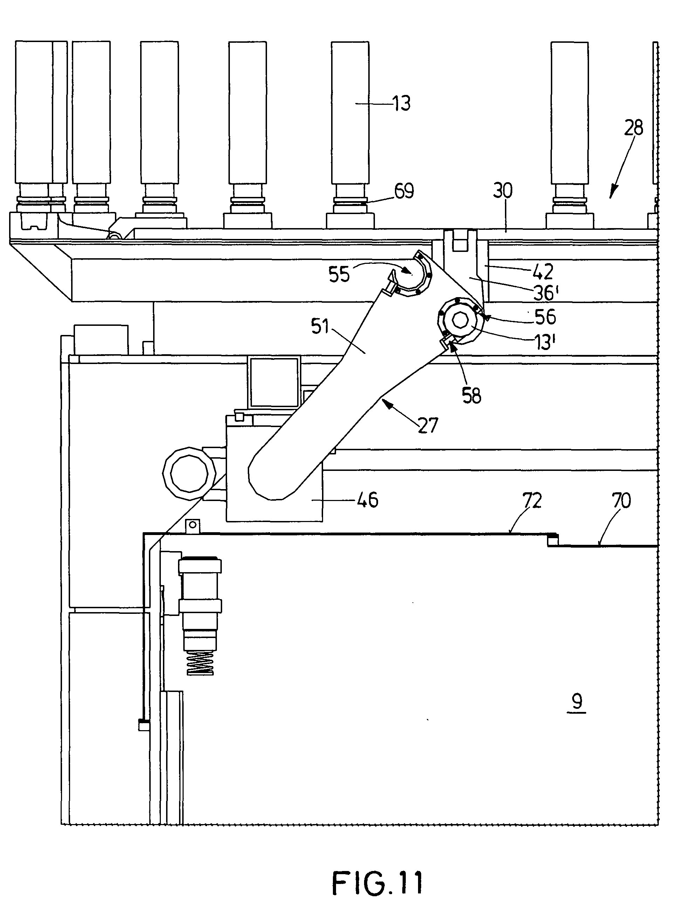

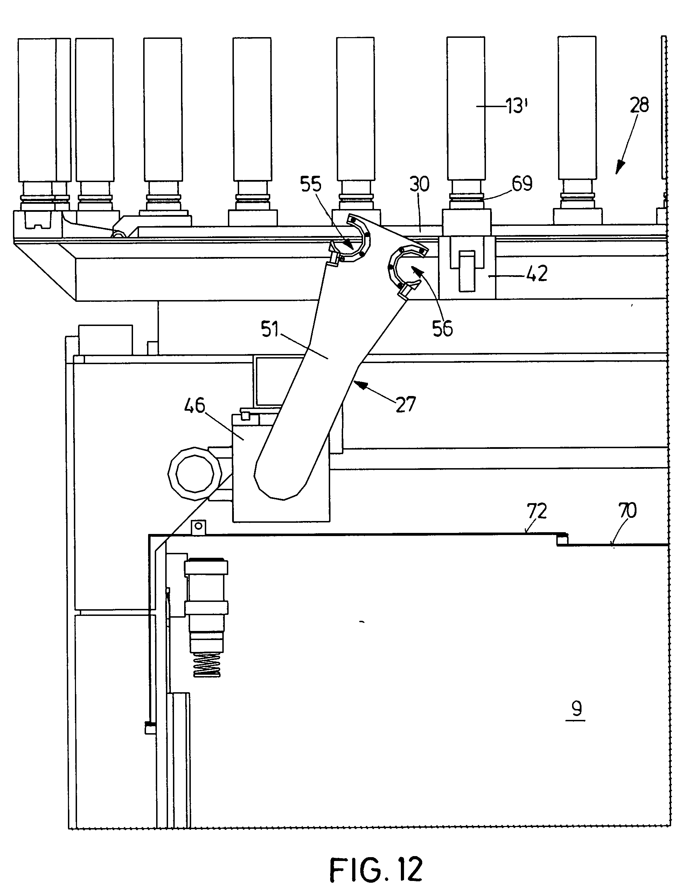

Der Wechselarm 51 schwenkt weiter bis in die in Fig. 11 dargestellt Rückgabeposition. Da sich der Wechselarm 51 in der vom Ständer 1 entfernten zweiten Endlage befindet, kann er nicht mit dem Werkzeug-Magazin 28 kollidieren. Dessen Magazin-Scheibe 30 ist bereits derart gedreht worden, dass die dem Werkzeug 13' zugeordnete Werkzeug-Aufnahme 36' sich bereits in heruntergeklapptem Zustand am Werkzeug-Bereitstellungsplatz 42 befindet, und zwar ebenfalls auf dem Drehkreis 74. Durch entsprechendes Zurückfahren des Schlittens 46 mit dem Wechselarm 51 wird das Werkzeug 13' in die Werkzeug-Aufnahme 36' des Magazins 28 geschoben. Die Arretiereinrichtung 58 des unteren Werkzeughalters 56 wird geöffnet, so dass der Wechselarm 51 entgegen der bisherigen Drehrichtung 74', also von Fig. 11 zu Fig. 12 entgegen dem Uhrzeigersinn, verschwenkt werden kann, so dass der Werkzeughalter 56 vom Werkzeug 13' freikommt. Dieses wird durch entsprechende Betätigung des Lineartriebs 43 wieder in seine in Fig. 12 dargestellte vertikale Position hochgeschwenkt.

Der Wechselarm 51 wird wieder in die Ruhestellung gemäß Fig. 5 nach unten verschwenkt. Der eigentliche Bearbeitungsprozess, also der Bearbeitungseinsatz der Arbeitsspindel 12, muss nur unterbrochen werden während der Phasen, in denen - wie geschildert - die Klappe 72 geöffnet ist. Wesentliche Teile des Werkzeugwechselvorgangs können erfolgen, während die Arbeitsspindel 12 noch im Einsatz ist. Das Werkzeug-Magazin 28 wird bei jedem Wechselvorgang so verfahren, dass das Werkzeug 13 beziehungsweise 13' jeweils wieder auf demselben Platz, also in derselben Werkzeug-Aufnahme 36 beziehungsweise 36', abgelegt werden kann. Wenn die Haupt-Drehrichtung 74' des Wechselarms 51 entsprechend den geschilderten Ausführungsbeispielen im Uhrzeigersinn verläuft, dann ist der untere Werkzeug-Halter 56 der voreilende Werkzeug-Halter und der obere Werkzeug-Halter 55 der nacheilende Werkzeug-Halter.

Da der Wechselarm 51 in den Schwenkbereichen, in denen er nicht durch die Öffnung 71 in den Arbeitsraum 9 eintaucht, frei verschwenkt werden kann, kann in diesem Bereich die Werkzeug-Wechseleinrichtung 27 außerhalb eines Werkzeug-Wechselvorgangs weitere Funktionen ausüben.

So kann der Wechselarin 51 beispielsweise während dieser Zeit ein Werkzeug 13'' aus dem Werkzeug-Magazin 28 entnehmen und in eine auf dem Drehkreis 74 angeordnete Mess-Vorrichtung 78 einsetzen, in der es mittels eines Mess-Gerätes 79 auf Beschädigung oder Bruch oder Verschleiß überprüft wird. Ein solches Mess-Gerät 79 kann mechanisch tastend, also mittels eines Messtasters, oder berührungslos, beispielsweise mittels eines Laserstrahls, arbeiten.

Weiterhin kann der Wechselarm 51 Werkzeuge 13 in eine Wechselvorrichtung 80 einsetzen, mit deren Hilfe ein Maschinenbediener in der Lage ist, während des Einsatzes der Arbeitsspindel 12, also Hauptzeit parallel, neue Werkzeuge 13 in das Werkzeug-Magazin 28 einzugeben oder Werkzeuge 13 aus dem Werkzeug-Magazin 28 auszutauschen.

Soll die Werkzeug-Wechseleinrichtung 27 bei der beschriebenen Ausführungsform einer Werkzeugmaschine oberhalb der Arbeitshöhe eines Maschinenbedieners liegen, wird in diesem Fall eine zusätzliche Verfahreinheit 81 für diese Wechselvorrichtung 80 vorgesehen. Sie weist beispielsweise eine am Ständer 1 angebrachte Linearführung 82 auf. Der Antrieb erfolgt über einen Elektro-Motor 83 und einen Zahnriementrieb 84. Alternativ kann der Antrieb auch über einen kolbenstangenlosen Pneumatikzylinder oder einen Kugelgewindetrieb erfolgen. Der Drehwinkel des Motors 83 wird über einen Drehwinkelgeber 85 erfasst und auf die Maschinensteuerung gegeben. Wenn ein kolbenstangenloser Pneumatikzylinder eingesetzt wird, ist eine genaue Erfassung der Position der Wechselvorrichtung 80 nicht erforderlich, da lediglich eine obere und eine untere Endlage, also definierte Endlagen, anzufahren sind. Diese Verfahreinheit 81 ermöglicht es dem Maschinenbediener, das Werkzeug 13 in einer gut zu erreichenden Arbeitshöhe in die Wechselvorrichtung 80 einzusetzen. Anschließend verfährt die Wechselvorrichtung 80 in eine obere Position im Drehkreis 74, in der der Wechselarm 51 der Werkzeug-Wechseleinrichtung 27 das Werkzeug 13 aus ihr entnehmen und in das Magazin 28 einsetzen kann. Umgekehrt kann mit dieser Wechselvorrichtung 80 auch ein mit der Werkzeug-Wechseleinrichtung 27 aus dem Magazin 28 entnommenes Werkzeug 13 in eine für den Maschinenbediener bequem erreichbare Position verfahren werden.

Es ist weiterhin auch möglich, auf dem Drehkreis 74 des Wechselarms 51 eine Vorrichtung vorzusehen, die das Werkzeug 13 selber oder die Werkzeughalter 55, 56 reinigt.

## Patentansprüche

1. Werkzeugmaschine
- mit einem Arbeitsraum (9) mit einem Werkstück-Halter (11)
- mit einer Arbeitsspindel (12),
-- die ein sich in einer z-Richtung erstreckendes Werkzeug (13) auswechselbar aufnimmt und
-- die in einer x-y-Ebene verfahrbar ist,
- mit einer Werkzeug-Wechseleinrichtung (27),
-- die einen in z-Richtung verschiebbaren und drehbaren Werkzeug-Wechselarm (51) aufweist,
--- an dem auf einem gemeinsamen Drehkreis (74) zwei Werkzeughalter (55, 56) angeordnet sind, die in einer geöffneten Stellung in einander entgegengesetzter Drehrichtung geöffnet sind und die mit je einer Arretiereinrichtung (58) versehen sind,
und
- mit einem Werkzeug-Magazin (28) mit Werkzeug-Aufnahmen (36, 36'),
-- die an einen Werkzeug-Bereitstellungsplatz (42) bringbar sind, und
-- die am Werkzeug-Bereitstellungsplatz (42) sich jeweils im Drehkreis (74) der Werkzeughalter (55, 56) befinden.

2. Werkzeugmaschine nach Anspruch 1, **dadurch gekennzeichnet,**
**dass** in Lager-Stellung befindliche Werkzeug-Aufnahmen (36, 36') des Werkzeug-Magazins (28) sich außerhalb des Drehkreises (74) des Werkzeug-Wechselarms (51) befinden.

3. Werkzeugmaschine nach Anspruch 1, **dadurch gekennzeichnet,**
**dass** der Werkzeug-Wechselarm (51) zwischen zwei Endlagen verschiebbar ist.

4. Werkzeugmaschine nach Anspruch 1, **dadurch gekennzeichnet,**
**dass** der Werkzeug-Wechselarm (51) an einer drehbaren und verschiebbaren Welle (49) angebracht ist.

5. Werkzeugmaschine nach Anspruch 1, **dadurch gekennzeichnet,**
**dass** der Werkzeug-Wechselarm (51) auf einem in z-Richtung verschiebbaren Schlitten (46) drehbar gelagert ist.

6. Werkzeugmaschine nach Anspruch 1, **dadurch gekennzeichnet,**
**dass** die Werkzeughalter (55, 56) jeweils einen Halbring (57) aufweisen, der einer Greiferrille (69) eines Werkzeuges (13, 13', 13") angepasst ist.

7. Werkzeugmaschine nach Anspruch 1, **dadurch gekennzeichnet,**
**dass** die Werkzeughalter (55, 56) etwa radial zum Drehkreis (74) verschiebbare Arretierbacken (59) aufweisen.

8. Werkzeugmaschine nach Anspruch 1, **dadurch gekennzeichnet,**
**dass** zwischen dem Arbeitsraum (9) und der Werkzeug-Wechseleinrichtung (27) eine Abdeckung (70) angeordnet ist, die eine von dem Drehkreis (74) des Werkzeug-Wechselarms (51) durchsetzte Öffnung (71) aufweist, die mittels einer Klappe (72) verschließbar ist.

9. Werkzeugmaschine nach Anspruch 1. **dadurch gekennzeichnet,**
**dass** im Drehkreis (74) des Werkzeug-Wechselarms (51) weitere Funktions-Einheiten vorgesehen sind.
